# EUROPÄISCHE PATENTSCHRIFT

(11) **EP 1 315 010 B1**
(45) Veröffentlichungstag und Bekanntmachung des Hinweises auf die Patenterteilung: **29.07.2009**
(21) Anmeldenummer: 02360307.9
(22) Anmeldetag: 12.11.2002
(51) Int. Cl.: G02B 6/44

(54) **Lichtwellenleiter-Endverschluss**
Termination for light guide
Terminaison de guide d'ondes optique

(30) Priorität: 21.11.2001 DE 10157056
(43) Veröffentlichungstag der Anmeldung: 28.05.2003
(73) Patentinhaber: Draka Comteq B.V., 1083 HJ Amsterdam (NL)
(72) Erfinder: Böhme, Ralph, 41169 Mönchengladbach (DE); Girbig, Reinhard, 41065 Mönchengladbach (DE); Korporal, Hans-Werner, 47053 Duisburg (DE)
(74) Vertreter: Dohmen, Johannes Maria Gerardus

(56) Entgegenhaltungen:
- EP-A- 0 433 565
- WO-A-01/37022
- DE-A- 4 242 038
- PATENT ABSTRACTS OF JAPAN vol. 018, no. 137 (E-1518), 7. März 1994 (1994-03-07) & JP 05 325688 A (FURUKAWA ELECTRIC CO LTD:THE), 10. Dezember 1993 (1993-12-10)

## Beschreibung

Die Erfindung betrifft einen Lichtwellenleiter (LWL)-Endverschluß eines LWL-Phasenseils nach dem Oberbegriff des Anspruchs 1.

Die Patentschrift WO 01/37022 zeigt einen Endverschluß für ein mindestens einen Lichtwellenleiter führendes Phasenseil zum Herunterfuhren des Lichtwellenleiters von Hochspannung auf Erdpotential, bestehend aus einem rohrformigen Verbundisolator, mit einer an einem Ende angebrachten Kopfarmatur und einer am entgegengesetzten Ende angebrachten Fußarmatur, wobei in der Wandung der Kopfarmatur eine Öffnung vorgesehen ist, um die optischen Fasern des Lichtwellenleiters des Phasenseils in den Innenraum der Kopfarmatur einzuführen , in der Wandung der Fußarmatur eine Öffnung mit einem Abdichtanordnung vorgesehen ist, um die optischen Fasern eines optischen Kabels flüssigkeitsdicht in den Innenraum der Fußarmatur einzuführen, zumindest eine Spleißkassette zur Aufnahme der Spleißverbindungen der optischen Fasern des Phasenseils und der optischen Fasern des optischen Kabels und Raum zur Lagerung der Vorrätslänge der optischen Fasern des optischen Kabels vorgesehen sind, und der Innenraum des Verbundisolators mit einer Isoliermasse ausgefühlt ist. Bei diesem Endverschluß werden die optischen Fasern des Phasenseils vom Innern der Kopfarmatur durch den Innenraum des Verbundsisolator in das Innere der Fußarmatur hereingeführt.

Die Patentschrift DE 39 42 245 zeigt einen Lichtwellenleiter-Endverschluß für in einem Phasenseil geführte Lichtwellenleiter, bestehend aus einem rohrförmigen Isolator mit einer an einem Ende angebrachten Kopfarmatur und einer am gegengesetzten Ende angebrachte Fußarmatur, wobei die Kopfarmatur Mitt.el zum Befestigen des Phasenseils und ein oberes Lichtwellenleiter-Spleißgehäuse mit einem Lichtwellenleiter-Spleißkassette umfaßt, und die Fußarmatur ein unteres Lichtwellenleiter-Spleißgehäuse mit einem Lichtwellenleiter-Spleißkassette umfaßt. Das oberste Spleißgehäuse ist rund ausgeführt und tangential zu seiner Umfang ist ein Rohrstutzen ausgesetzt, durch den der oder die Lichtwellenleiter des Phasenseils ins Spleißgehäuse hineingefürt werden. Der Isolator besteht aus einem glasfaserverstärkten Kunststoffrohr, welches von einer Schicht aus Silikonkautschuk umhüllt ist und mehrere übereinander angeordnete Schirme aus Silikonkautschuk aufweist. Der Innenraum des Kunststoffrohrs ist mit Silikonkautschuk ausgefüllt. Zwischen den beiden Spleißgehäusen erstrecken sich ein oder mehrere Lichtwellenleiter-Abschnitte, welche entlang der äußeren Mantelfläche des Kunststoffrohrs in Silikonkautschuk eingebettet in Windungen verlaufen, durch einen Ringraum zwischen dem Kunststoffrohr und der Innenwandung eines Schutzelements, welches das Kunststoffrohr umgibt. Die Lichtwellenleiter-Abschnitten sind verspleißt mit den Spleißkassetten im oberen und unteren Spleißgehäuse. Bei diesem Lichtwellenleiter-Endverschluß werden in der Spleißkassette in dem oberen Spleißgehäuse die einzelnen Enden der Lichtwellenleiter des Phasenseils verschweißt mit Enden der Lichtwellenleiter-Abschnitte und werden in der Spleißkassette in dem unteren Spleißgehäuse die einzelnen Enden der Lichtwellenleiter eines weiterführenden LichtwellenleiterLeitung verschweißt mit den entgegengesetzten Enden der Lichtwellenleiter-Abschnitte.

Der Lichtwellenleiter-Endverschluß ist im Werk vollständig vorgefertigt und braucht an der Baustelle nur aufgestellt und angeschlossen zu werden.

Nachteilig ist bei dieser Lösung, daß sowohl die Lichtwellenleiter des Phasenseils als auch die weiterführenden Lichtwellenleiter an der Baustelle mit den im Isolator verlegten Lichtwellenleiter verspleißt und in der jeweiligen Spleißkassette abgelegt werden müssen.

Diese Vorgehensweise ist insbesondere dann von erheblichem Nachteil, wenn mehr als ein Lichtwellenleiter in dem Phasenseil untergebracht ist. In neuerer Zeit werden bis zu 144 Lichtwellenleiter in einem Phasenseil vorgesehen, wobei ein Leiterdraht jeweils durch ein Stahlröhrchen in dem Phasenseil ersetzt ist. Bei einer Belegung des Phasenseils mit 144 Lichtwellenleitern sind drei Röhrchen mit jeweils 48 Lichtwellenleitern in einem Phasenseil unterzubringen. Die in luftiger Höhe auch bei widrigen Witterungsverhältnissen vorzunehmenden Spleißarbeiten nehmen viel Zeit in Anspruch und können sich über einen Zeitraum von bis zu einer Woche erstrecken.

Dadurch wird die Inbetriebnahme einer Hochspannungsanlage unnötig verzögert.

Der vorliegenden Erfindung liegt die Aufgabe zugrunde, den bekannten Lichtwellenleiter-Endverschluß dahingehend zu verbessern, daß die Spleißarbeiten am Montageort wesentlich verkürzt werden.

Diese Aufgabe wird durch das im Kennzeichen des Anspruchs 1 Erfaßte gelöst.

Neben einer erheblichen Gewichtseinsparung gegenüber den bislang verwendeten Verbundisolatoren auf der Basis von Porzellan weist der erfindungsgemäße Lichtwellenleiter-Endverschluß noch den Vorteil auf, daß lediglich eine Spleißverbindung pro Lichtleitfaser in luftiger Höhe durchgeführt werden muß. Die Einführung der Ader bzw. der Adern des Phasenseils in die Fußarmatur sowie die Einführung des Lichtwellenleiteranschlußkabels in die Kopfarmatur erfolgen mittels standardisierter Kabelverschraubungen. Es kommen jedoch auch Mehrfachabdichtungen für eine Bündeladerabdichtung zum Einsatz.

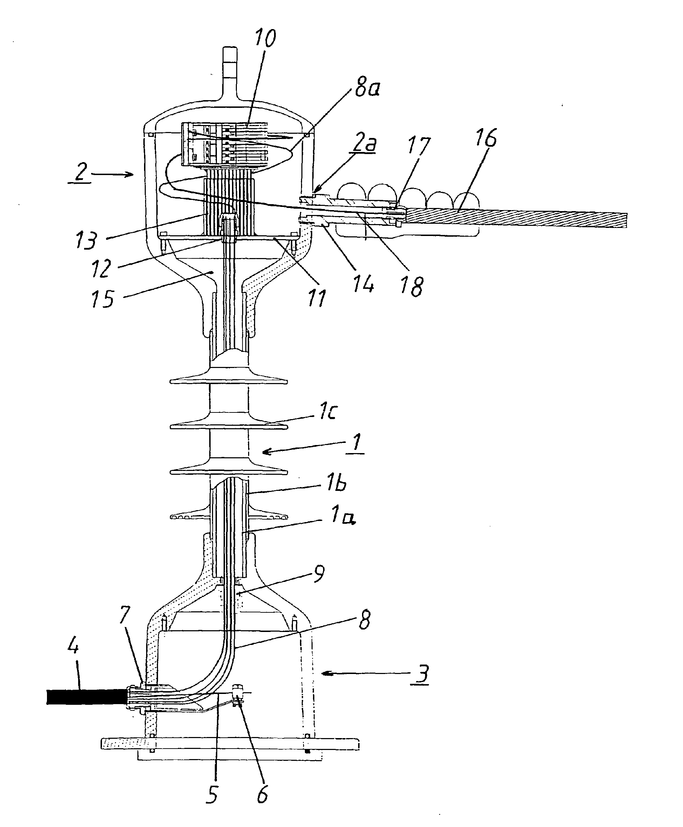

Die Erfindung ist anhand des in der Figur schematisch dargestellten Ausführungsbeispiels näher erläutert.

Der Lichtwellenleiter-Endverschluß besteht aus einem Verbundisolator 1 aus einem Rohr 1a aus glasfaserverstärktem Kunststoff, auf welches eine Schicht 1b aus Silikongummi aufextrudiert ist, sowie aus mehreren Tellerschirmen 1c, die an die Schicht 1 b anvulkanisiert sind. An den Enden des Verbundisolators 1 ist eine Kopfarmatur 2 sowie eine Fußarmatur 3 angebracht. Kopf- und Fußarmatur lassen sich konstruktiv aus wenigen Grundbauteilen für beide Funktionen gestalten.

Die Fußarmatur 3 dient zum Aufständern des Endverschlusses und zur Einführung und Abfangung eines metallfreien Lichtwellenleiter-Anschlußkabels 4, dessen zugfestes Zentralelement 5 innerhalb der Fußarmatur 3, wie bei 6 dargestellt, abgefangen wird. Das Lichtwellenleiterkabel 4 wird durch eine handelsübliche Kabelverschraubung 7 flüssigkeitsdicht in das Innere der Fußarmatur 3 hereingeführt. Die Adern 8 - in der Regel sind dies Bündeladern - werden durch das Innere des Rohres 1a hindurch bis zur Kopfarmatur 2 geführt. Eine weitere Kabelverschraubung 9 dichtet den Hohlraum des Rohres 1a nach unten ab.

Die Kopfarmatur 2 weist in ihrem Innern einen Spleißraum auf, der zumindest eine Spleißkassette 10 aufnimmt. Die Spleißkassette 10 ist vorzugsweise so ausgestaltet, daß bis zu 144 Spleiße untergebracht werden können. Eine Kaskadierung der Spleißkassetten für eine weitere Ausbaustufe ist möglich.

Der Innenraum der Kopfarmatur 2 ist so ausgestaltet, daß eine Vorratslänge 8a der Adern 8 Platz findet. In der Kopfarmatur 2 befindet sich noch ein Trennblech 11, welches den Hohlraum des Rohres 1a gegen den Innenraum der Kopfarmatur 2 abschließt. Die Adern 8 sind flüssigkeitsdicht durch das Trennblech 11 hindurchgeführt, und zwar mittels einer handelsüblichen Kabelverschraubung 12 mit Mehrfachdichtung.

An dem Trennblech 11 ist eine Halterung 13 befestigt, an deren Ende die Spleißkassetten 10 gehaltert sind.

In der Kopfarmatur 2 befindet sich eine Öffnung 2a, in welche ein zugfester Hohlbolzen 14 eingelassen ist, durch welchen die Ader 18 bzw. mehrere Adern des Phasenseils 16 in das Innere der Kopfarmatur 2 hereingeführt ist bzw. sind.

Die Befestigung des Phasenseils 16 an dem Endverschluß ist an sich bekannt und soll nicht näher beschrieben werden.

Die Ader 18 des Phasenseils 16 ist üblicherweise eine sogenannte Stahlbündelader, d. h. im Innern eines Stahlröhrchens sind eine Vielzahl von Lichtwellenleitern z. B. 48 angeordnet.

Die Stahlbündelader 18 wird flüssigkeitsdicht durch eine Kabelverschraubung 17 in den Hohlbolzen 14 eingeführt.

Der Innenraum des Rohres 1a und der unterhalb des Trennbleches 11 befindliche Ausgleichsraum 15 wird mit einer Füllmasse auf Basis Silikon blasenfrei ausgefüllt. Die Befüllung des Hohlraumes sowie des Ausgleichsraums 15 erfolgt nach Abschluß der Spleißarbeiten, kann jedoch auch bereits werksseitig vorgenommen werden.

Dadurch, daß im Gegensatz zum Stand der Technik lediglich eine Spleißkassette im erfindungsgemäßen Endverschluß vorhanden ist, werden die Spleißarbeiten vor Ort, d. h. auf dem Hochspannungsmast auf ein Minimum reduziert. Durch die Reduzierung auf nur einen Spleiß pro Lichtwellenleiter ist das Gesamt-Dämpfungsbudget oder die Streckendämpfung niedriger.

Zum Anschluß des Phasenseils 16 an den Endverschluß wird das Ende des Stahlröhrchens 18 abgesetzt und somit die Lichtwellenleiter freigelegt, deren Enden dann mit den Enden der Lichtwellenleiter des LWL-Kabels 4 verspleißt werden können.

## Patentansprüche

1. Lichtwellenleiter-Endverschluß für die optischen Fasern (8a) eines Lichtwellenleiter-Phasenseils (16), bestehend aus einem rohrförmigen Verbundisolator (1), mit einer an einem Ende angebrachten Kopfarmatur (2) und einer am entgegengesetzten Ende angebrachten Fußarmatur (3), wobei in der Wandung der Kopfarmatur (2) eine Öffnung vorgesehen ist, um die optischen Fasern (8a) des Lichtwellenleiter-Phasenseils (16) flussigkeitsdicht in den Innenraum der Kopfarmatur (2) hineinzuführen, wobei im Innenraum der Kopfarmatur (2) zumindest eine Spleißkassette (10) zur Aufnahme der Spleißverbindungen der optischen Fasern (8a) des Lichtwellenleiter-Phasenseils (16) vorgesehen ist, und wobei der Fußarmatur (3) ausgestaltet ist, um ein optisches Kabel in den Innenraum der Fußarmatur hineinzuführen, **dadurch gekennzeichnet, dass**
a) in der Wandung der Fußarmatur (3) eine Öffnung mit einer Kabelverschraubung (7) vorgesehen ist um ein optisches Kabel (4) flüssigkeitsdicht durch die Kabelverschraubung (7) in den Innenraum der Fußarmatur (3) hineinzuführen
b) in der Fußarmatur (3) am Ende des Verbundisolators (1) eine Kabelverschraubung (9) vorgesehen ist, um den Innenraum des Verbundisolators (1) abzudichten und die optischen Fasern und/oder die Adern (8) des optischen Kabels (4) flüssigkeitsdicht aus dem Innenraum der Fußarmatur (3) durch die Kabelverschraubung (9) in den Innenraum des Verbundisolators (1) bis zur Kopfarmatur (2) hineinzuführen
c) der Kopfarmatur (2) im Innern einen Spleißraum aufweist, in dem die zumindest eine Spleißkassette (10) zur Aufnahme der Spleißverbindungen der optischen Fasern (8a) des Lichtwellenleiter-Phasenseils (16) aufgenommen ist,
d) der Kopfarmatur (2) im Innern einen Ausgleichsraum (15) für die thermisch bedingte Ausdehnung einer Füllmasse aufweist, wobei der Ausgleichsraum (15) an dem Innenraum des Verbundisolators (1) anschließt
e) in der Kopfarmatur (2) ein Trennblech (11) vorgesehen ist, welches den Hohlraum des Rohres (1a) gegen den Innenraum der Kopfarmatur (2) abschließt,
f) in dem Trennblech (11) eine Öffnung mit einer Kabelverschraubung (12) vorgesehen ist, um den Spleißraum gegen den Ausgleichsraum (15) abzudichten und die optischen Fasern und/oder die Adern (8) eines optischen Kabels (4) flüssigkeitsdicht aus dem Innenraum des Verbundisolators (1) durch den Ausgleichsraum (15) und die Kabelverschraubung (12) in den Spleißraum hineinzuführen,
g) die zumindest eine Spleisskassette (10) ausgestaltet ist zur Aufnahme der Spleißverbindungen der optischen Fasern (8a) des Lichtwellenleiter-Phasenseils (16) mit der in den Spleißraum hineingeführten optischen Fasern und/oder Adern (8) eines optischen Kabels (4)
h) Raum zur Lagerung des Vorrätslänge (8a) der in den Spleissraum hineingefühten optischen Fasern und/oder Adern (8) des optischen Kabels (4) vorgesehen ist.

2. Lichtwellenleiter-Endverschluß nach Anspruch 1, wobei an dem Trennblech (11) eine Halterung (13) für die zumindest eine Spleißkassette (10) befestigt ist.

3. Verfahren zum Verspleißen von optischen Fasern eines Lichtwellenleiter-Phasenseils mit optischen Fasern und/oder Adern eines optischen Kabels in einem Lichtwellenleiter-Endverschluß nach einem der Ansprüche 1 bis 2, wobei der Innenraum des Verbundisolators (1) nach Abschluß der Spleißarbeiten blasenfrei mit einer flüssigen Füllmasse ausgefüllt wird.

4. Verfahren zum Verspleißen von optischen Fasern eines Lichtwellenleiter-Phasenseils mit optischen Fasern und/oder Adern eines optischen Kabels nach Anspruch 3, wobei die Füllmasse ein Silikonelastomer ist.

5. Verfahren zum Verspleißen von optischen Fasern eines Lichtwellenleiter-Phasenseils mit optischen Fasern und/oder Adern eines optischen Kabels nach Anspruch 3 oder 4, wobei der Ausgleichsraum (15) mit dem flüssigen Füllmasse blasenfrei ausgefüllt wird.

## Claims

1. Optical waveguide termination for the optical fibres (8a) of an optical waveguide phase conductor (16), consisting of a tubular composite insulator (1), having a top fitting (2) arranged at one end and a bottom fitting (3) arranged at the opposite end, there being provided in the wall of the top fitting (2) an aperture for guiding the optical fibres (8a) of the optical waveguide phase conductor (16) into the interior of the top fitting (2) in fluid-tight manner, there being provided in the interior of the top fitting (2) at least one splice cassette (10) for accommodating the splice connections of the optical fibres (8a) of the optical waveguide phase conductor (16), and the bottom fitting (3) being arranged to guide an optical cable into the interior of the bottom fitting, **characterised in that**
(a) in the wall of the bottom fitting (3) there is provided an aperture having a cable gland (7) for guiding an optical cable (4) through the cable gland (7) and into the interior of the bottom fitting (3) in fluid-tight manner,
(b) in the bottom fitting (3) at the end of the composite insulator (1) there is provided a cable gland (9) for sealing off the interior of the composite insulator (1) and for guiding the optical fibres and/or the cores (8) of the optical cable (4) in fluid-tight manner from the interior of the bottom fitting (3), through the cable gland (9) and into the interior of the composite insulator (1), to the top fitting (2),
(c) the top fitting (2) has in its interior a splice space, in which the at least one splice cassette (10) for accommodating the splice connections of the optical fibres (8a) of the optical waveguide phase conductor (16) is accommodated,
(d) the top fitting (2) has in its interior a compensation space (15) for the thermally induced expansion of a filling mass, the compensation space (15) being adjacent to the interior of the composite insulator (1),
(e) in the top fitting (2) there is provided a separating plate (11) which closes off the hollow space of the tube (1 a) from the interior of the top fitting (2),
(f) in the separating plate (11) there is provided an aperture having a cable gland (12) for sealing the splice space off from the compensation space (15) and for guiding the optical fibres and/or cores (8) of an optical cable (4) in fluid-tight manner from the interior of the composite insulator (1), through the compensation space (15) and the cable gland (12) and into the splice space,
(g) the at least one splice cassette (10) is arranged to accommodate the splice connections of the optical fibres (8a) of the optical waveguide phase conductor (16) to the optical fibres and/or cores (8) of an optical cable (4) which have been guided into the splice space,
(h) space is provided for storing the spare lengths (8a) of the optical fibres and/or cores (8) of the optical cable (4) which have been guided into the splice space.

2. Optical waveguide termination according to claim 1, wherein a mounting (13) for the at least one splice cassette (10) is fixed to the separating plate (11).

3. Method of splicing optical fibres of an optical waveguide phase conductor with optical fibres and/or cores of an optical cable in an optical waveguide termination according to one of claims 1 to 2, wherein the interior of the composite insulator (1) is, after completion of the splicing work, filled with a liquid filling mass in a bubble-free manner.

4. Method of splicing optical fibres of an optical waveguide phase conductor with optical fibres and/or cores of an optical cable, according to claim 3, wherein the filling mass is a silicone elastomer.

5. Method of splicing optical fibres of an optical waveguide phase conductor with optical fibres and/or cores of an optical cable, according to claim 3 or 4, wherein the compensation space (15) is filled with the liquid filling mass in a bubble-free manner.

## Revendications

1. Terminaison de guide d'ondes optiques pour les fibres optiques (8a) d'un câble de phase de guide d'ondes optiques (16), se composant d'un isolateur composite tubulaire (1), avec une armature supérieure (2) placée à une extrémité et une armature inférieure (3) placée à l'extrémité opposée, une ouverture étant prévue dans la paroi de ladite armature supérieure (2) afin de faire entrer, de façon étanche aux liquides, les fibres optiques (8a) du câble de phase de guide d'ondes optiques (16) dans l'espace intérieur de l'armature supérieure (2), au moins une cassette d'épissurage (10) destinée au logement des épissures des fibres optiques (8a) du câble de phase de guide d'ondes optiques (16) étant prévue dans l'espace intérieur de l'armature supérieure (2), et l'armature inférieure (3) étant conçue afin de faire entrer un câble optique dans l'espace intérieur de l'armature inférieure, **caractérisée en ce que**
a) une ouverture avec un passe-câble à vis (7) est prévue dans la paroi de l'armature inférieure (3) afin de faire entrer, de façon étanche aux liquides, un câble optique (4) dans l'espace intérieur de l'armature inférieure (3) via le passe-câble à vis (7),
b) un passe-câble à vis (9) est prévu dans l'armature inférieure (3) à l'extrémité de l'isolateur composite (1) afin d'étanchéifier l'espace intérieur de l'isolateur composite (1) et de faire entrer, de façon étanche aux liquides, les fibres optiques et/ou les brins (8) du câble optique (4) depuis l'espace intérieur de l'armature inférieure (3) via le passe-câble à vis (9) dans l'espace intérieur de l'isolateur composite (1) jusqu'à l'armature supérieure (2),
c) l'armature supérieure (2) présente, à l'intérieur, un espace d'épissurage, dans lequel est logée ladite au moins une cassette d'épissurage (10) destinée au logement des épissures des fibres optiques (8a) du câble de phase de guide d'ondes optiques (16),
d) l'armature supérieure (2) présente, à l'intérieur, un espace de compensation (15) pour la dilatation thermique d'une masse de remplissage, ledit espace de compensation (15) étant contigu à l'espace intérieur de l'isolateur composite (1),
e) un séparateur (11) est prévu dans l'armature supérieure (2), lequel ferme la cavité du tube (1a) par rapport à l'espace intérieur de l'armature supérieure (2),
f) une ouverture avec un passe-câble à vis (12) est prévue dans le séparateur (11) afin d'étanchéifier l'espace d'épissurage par rapport à l'espace de compensation (15) et de faire entrer, de façon étanche aux liquides, les fibres optiques et/ou les brins (8) d'un câble optique (4) depuis l'espace intérieur de l'isolateur composite (1) via l'espace de compensation (15) et le passe-câble à vis (12) dans l'espace d'épissurage,
g) ladite au moins une cassette d'épissurage (10) est conçue en vue du logement des épissures des fibres optiques (8a) du câble de phase de guide d'ondes optiques (16) avec les fibres optiques et/ou les brins (8) d'un câble optique (4) introduits dans l'espace d'épissurage,
h) l'espace destiné au logement de la longueur de réserve (8a) des fibres optiques et/ou des brins (8) du câble optique (4) introduits dans l'espace d'épissurage est prévu.

2. Terminaison de guide d'ondes optiques selon la revendication 1, dans laquelle un support (13) pour ladite au moins une cassette d'épissurage (10) est fixé au niveau du séparateur (11).

3. Procédé d'épissurage de fibres optiques d'un câble de phase de guide d'ondes optiques avec des fibres optiques et/ou des brins d'un câble optique dans une terminaison de guide d'ondes optiques selon l'une quelconque des revendications 1 à 2, dans lequel l'espace intérieur de l'isolateur composite (1) est rempli sans soufflures avec une masse de remplissage liquide une fois les travaux d'épissurage achevés.

4. Procédé d'épissurage de fibres optiques d'un câble de phase de guide d'ondes optiques avec des fibres optiques et/ou des brins d'un câble optique selon la revendication 3, dans lequel la masse de remplissage est un élastomère silicone.

5. Procédé d'épissurage de fibres optiques d'un câble de phase de guide d'ondes optiques avec des fibres optiques et/ou des brins d'un câble optique selon la revendication 3 ou 4, dans lequel l'espace de compensation (15) est rempli sans soufflures avec une masse de remplissage liquide.
